# EUROPÄISCHE PATENTSCHRIFT

(11) **EP 3 400 401 B1**
(45) Veröffentlichungstag und Bekanntmachung des Hinweises auf die Patenterteilung: **20.11.2019**
(21) Anmeldenummer: 17700148.4
(22) Anmeldetag: 05.01.2017
(51) Int. Cl.: F16M 11/10, F16B 2/12, F16M 11/20, F16M 11/24, F16M 13/02

(54) **SCHNELLKLEMMSTATIV**
QUICK-CLAMP MOUNT
PIED À SERRAGE RAPIDE

(30) Priorität: 07.01.2016 DE 202016000066 U
(43) Veröffentlichungstag der Anmeldung: 14.11.2018
(73) Patentinhaber: Schertel, Wilfried, 91 180 Heideck (DE)
(72) Erfinder: Schertel, Wilfried, 91 180 Heideck (DE)
(74) Vertreter: Kesselhut, Wolf
(86) Internationale Anmeldenummer: PCT/EP2017/000011
(87) Internationale Veröffentlichungsnummer: WO 2017/118604

(56) Entgegenhaltungen:
- CN-U- 201 803 082
- DE-C- 837 760
- JP-A- S5 997 394
- US-A- 1 682 180
- US-A1- 2014 191 103
- US-B1- 6 244 759

## Beschreibung

Die Erfindung betrifft ein Schnellklemmstativ gemäß dem Oberbegriff von Anspruch 1.

Um beim Einsatz von optischen Instrumenten wie Objektiven, Ferngläsern und Kameras bei hohen Vergrößerungen ein Verwackeln des Bildes aufgrund der menschlichen Muskelbewegungen der Hand oder des Arms zu verhindern, werden bekanntermaßen Stative eingesetzt, an denen das jeweilige optische Instrument befestigt wird.

Neben Stativen, die beispielsweise mittels eines Dreibeins auf ebenen Flächen abgestellt werden, sind in diesem Zusammenhang ebenfalls Stative bekannt, die mithilfe einer Klemmeinrichtung an ortsfesten Klemmobjekten, wie beispielsweise Stangen oder Tischplatten, befestigt werden können.

So beschreibt die DE 69569 ein Kamerastativ, das eine Stativstange besitzt, die mittels einer Schraubzwinge an einer Tischplatte festgeschraubt werden kann.

Weiterhin offenbart die DE 8324394 U1 ein Klemmstativ, bei dem an der Stativstange verschiebbare Klemmbacken aufgenommen sind, die parallel zur Stativstange verschoben und gleichzeitig relativ zu dieser verschwenkt werden können, um den vom Stativ benötigten Raumbedarf im zusammengeklappten Zustand zu verringern. An einer der beiden verschiebbaren Klemmbacken ist eine Spannschraube befestigt, mit der die Stativstange an einem Klemmobjekt, wie beispielsweise einem Baum, befestigt werden kann. Die zuvor genannten Dokumente geben keinen Hinweis darauf, die Klemmbacken an einem parallel zur Stativstange verlaufenden stabförmigen Zugelement zu befestigen und die Stativstange in einer hülsenartigen Führung mit einer Arretiereinrichtung aufzunehmen, in welcher die Stativstange verschiebbar und in unterschiedlichen Positionen arretierbar geführt ist. Aufgrund der Konstruktion ist die Handhabung der Stative beim Befestigen aufwendig und die Einstellbarkeit des Stativs eingeschränkt. Weiterhin offenbaren auch DE837760C, US6244759B1 und CN201803082U Klemmstative.

Demgemäß ist es eine Aufgabe der vorliegenden Erfindung, ein Schnellklemmstativ zu schaffen, welches einen gegenüber der Länge der Stativstange vergrößerten Ausziehbereich besitzt und mit welchem sich optische Instrumente sowie auch Halterungen zum Halten von Gewehren in kürzester Zeit und in ergonomischer Weise an Gegenständen mit unterschiedlichsten Durchmessern befestigen lassen.

Diese Aufgabe wird erfindungsgemäß durch ein Schnellklemmstativ mit den Merkmalen von Anspruch 1 gelöst.

Weitere Merkmale der Erfindung sind in den Unteransprüchen beschrieben.

Gemäß der Erfindung umfasst ein Schnellklemmstativ eine Stativstange, an deren einem Ende ein Aufnahmeadapter zur Aufnahme eines optischen Instruments oder eines sonstigen zu haltenden Gegenstandes angeordnet ist. Das erfindungsgemäße Schnellklemmstativ weist weiterhin eine mit der Stativstange gekoppelte Klemmeinrichtung auf, mit der sich die Stativstange an einem ortsfesten Klemmobjekt, wie insbesondere einem Baum oder einer Tischplatte oder einem Pfahl befestigen lässt.

Das erfindungsgemäße Stativ zeichnet sich dadurch aus, dass die Klemmeinrichtung eine durch einen Handhebelmechanismus betätigbare Schnellspannzwinge ist, an der eine hülsenartige Führung mit einer Arretiereinrichtung aufgenommen ist, in welcher die Stativstange linear verschiebbar geführt ist und mithilfe der Arretiereinrichtung in unterschiedlichen Positionen arretierbar werden kann.

Durch die Erfindung ergibt sich der Vorteil, dass das Stativ mit dem daran befestigten Aufnahmeadapter für ein zu haltendes optisches Instrument oder auch für eine Gewehrshalterung oder Lichtquelle nach einem groben Einstellen der Schnellspannzwinge auf die Dicke des betreffenden ortsfesten Klemmobjekts mit lediglich einer Hand und nahezu lautlos mit einer überaus hohen Klemmkraft geklemmt werden kann. Hierbei stellt es einen besonderen Vorteil dar, dass das optische Instrument, bzw. der Aufnahmeadapter, an dem dieses befestigt wird, während des Klemmvorgangs mit der anderen Hand lediglich in der gewünschten Position gehalten werden muss, um den Handhebelmechanismus zu betätigen. Dadurch entfällt das bei Schraubzwingen, die mit einer rotierbaren Spindel versehen sind, auftretende Problem, dass die Klemmeinrichtung mit beiden Händen gehalten werden muss, um ein Verdrehen derselben - und damit des gehaltenen optischen Instruments bzw. Gegenstandes - durch die von der Spindel übertragenen Drehmomente zu verhindern.

Bei der bevorzugten Ausführungsform der Erfindung weist die Schnellspannzwinge ein Griffelement und ein im Griffelement linear verschiebbar geführtes stabförmiges Zugelement auf. Am einen Ende des stangen- oder stabförmigen Zugelements ist ein beweglicher Spannarm befestigt, der drehsteif mit dem stabförmigen Zugelement verbunden ist und sich zusammen mit diesem relativ zum Griffelement bewegt, wenn das stabförmige Zugelement durch das Griffelement hindurch geschoben wird. Das stabförmige Zugelement ist mittels des im Griffelement wirkenden Handhebelmechanismus mit einer Vorschubkraft beaufschlagbar, welche den beweglichen Spannarm auf einen Haltearm zu bewegt, der dem beweglichen Spannarm gegenüberliegend am Griffelement befestigt ist. Diese Ausführungsform der Erfindung besitzt den Vorteil, dass das Griffelement für den Klemmvorgang mit einer Hand am Griffelement, bzw. am Handhebel des Handhebelmechanismus ergriffen und in kürzester Zeit geräuschlos in Richtung auf den beweglichen Spannarm zu verschoben werden kann, um den Spannarm und den Haltearm an die einander gegenüberliegenden Oberflächen eines ortsfesten Klemmobjekts anzulegen.

Bevorzugter Weise umfasst der Handhebelmechanismus, der beispielsweise ähnlich dem Betätigungsmechanismus der in der DE 39171473 beschriebenen Schnellspannzwinge ausgeführt sein kann, einen am Griffelement verschwenkbar gelagerten Handhebel, der auf ein verschwenkbar angeordnetes Eingriffselement wirkt, welches reib- und/oder formschlüssig in die Außenseite des stabförmigen Zugelements eingreift. Durch Verschwenken des nach Art eines Bremsgriffs bei einem Zweirad ausgestalteten, am Griffelement verschwenkbar gelagerten Handhebels lässt sich das Eingriffselement verschwenken und dadurch ein Vorschub des Zugelements mit einer hohen Zugkraftkraft erzeugen, die wiederum zu einer entsprechend hohen Klemmkraft führt, mit der die beiden Spann- und Haltearme gegeneinander gezogen werden, um das erfindungsgemäße Stativ mit einer hohen Positionsgenauigkeit an dem Klemmobjekt zu befestigen. Die Ausführungsform besitzt den weiteren Vorteil, dass sich die Größe der Zugkraft - und dadurch die Größe der Klemmkraft - durch eine geeignete Wahl der Länge des Handhebels mit geringem Aufwand verändern und dadurch an die jeweiligen Anwendungen anpassen lässt.

Um nach dem Einsatz des erfindungsgemäßen Schnellklemmstativs dieses in kürzester Zeit wieder von dem jeweiligen ortsfesten Klemmobjekt zu lösen, sind dem Eingriffselement, bzw. dem mit diesem zusammen arbeitenden auf Bremselement in vorteilhafter Weise Entriegelungsmittel zugeordnet, welche zur Aufhebung der zwischen dem Griffelement und dem beweglichen Spannarm wirkenden Klemmkraft auf das Eingriffselement oder das Bremselement wirkt und dieses insbesondere durch Verdrehen entgegen der über das Zugelement übertragenen Kräfte aus ihrer aktuellen Klemmposition heraus verdreht.

Nach einem weiteren der Erfindung zu Grunde liegenden Gedanken ist am Haltearm und/oder am beweglichen Spannarm eine Klemmsicke geformt, die beispielsweise eine Erstreckung in Längsrichtung des Arms von 1 cm bis 5 cm und eine Tiefe von 0,5 cm - 3 cm besitzen kann. Hierdurch ergibt sich der Vorteil, dass sich das erfindungsgemäße Stativ sowohl an Klemmobjekten wie Stangen, als auch an Klemmobjekten wie Baumstämmen befestigen lässt, deren Durchmesser sich erheblich unterscheiden. Zudem gestattet das Vorsehen einer Klemmsicke im Haltearm oder im Spannarm, dass sich diese in gleicher Weise an runden Objekten wie auch an ebenen Flächen, wie beispielsweise Tischplatten, befestigen lassen. In der Klemmsicke ist vorzugsweise ein dornartiges Eingriffselement angeordnet, welches z.B. als eine in eine Gewindebohrung in der Klemmsicke eindrehbare, vorzugsweise mit einer Spitze versehene Madenschraube, ausgeführt sein kann, welche beim Anziehen der Klemmeinrichtung formschlüssig in das Material des Klemmobejekts eindringt und dadurch eine zusätzliche Verdrehsicherung erzeugt.

Nach einer weiteren Ausführungsform der Erfindung kann es vorgesehen sein, dass die hülsenartige Führung insbesondere über einen Kugelkopf verschwenkbar an der Schnellspannzwinge befestigt ist und durch eine Arretiereinrichtung, beispielsweise eine Klemmschraube, in unterschiedlichen Winkelpositionen arretierbar werden kann. Hierdurch eröffnet sich die Möglichkeit, dass sich der Neigungswinkel der Stativstange gegenüber dem Griffelement verändern lässt, so dass sich die Adapterplatte mit dem optischen Instrument nach dem Festklemmen der Klemmeinrichtung in einem Abstand entfernt von dem ortsfesten Klemmobjekt positionieren lässt. Beispielsweise lässt sich hierdurch die Stativstange in einem Winkel von 45° oder 90° gegenüber einem vertikalen Pfahl positionieren, um das optische Instrument oder auch die Auflage Halterung für ein Jagdgewehr neben dem Pfahl zu positionieren.

Nach einem weiteren der Erfindung zugrunde liegenden Gedanken ist die hülsenartige Führung vorzugsweise so an dem Griffelement befestigt, dass sich das stabförmige Zugelement parallel zur Stativstange erstreckt. Hierdurch ergibt sich der Vorteil einer besonders kompakten Ausgestaltung des erfindungsgemäßen Schnellklemmstativs bei gleichzeitiger maximaler Ausziehlänge.

Um die Ausziehlänge des Stativs bei geringen Transportabmessungen noch weiter zu vergrößern, besteht die Stativstange vorzugsweise aus wenigstens einem ersten und einem zweiten Stangenabschnitt, die teleskopartig ineinander einschiebbar sind und durch eine Klemmeinrichtung in einer gewünschten Auszugsposition relativ zueinander arretierbar werden können, ähnlich, wie dies z.B. von Skistöcken her bekannt ist.

Gleichzeitig oder auch alternativ hierzu kann zusätzlich zu der zuvor beschriebenen hülsenartigen Führung, die sich vorzugsweise parallel zum Zugelement erstreckt, eine weitere hülsenartige Führung drehfest am Griffelement befestigt sein, die um einen Winkel von insbesondere 45° oder 90° relativ zum Zugelement, bzw. zur ersten hülsenartigen Führung verdreht ist. In dieser weiteren hülsenartigen Führung ist die Stativstange in der gleichen Weise wie zuvor im Zusammenhang mit der ersten hülsenartigen Führung beschrieben ebenfalls verschiebbar aufgenommen und mittels einer weiteren Arretiereinrichtung in einer beliebigen Position arretierbar.

Hierdurch ergibt sich der Vorteil, dass sich das erfindungsgemäße Stativ durch ein einfaches Umstecken der Stativstange bei Bedarf in kürzester Zeit so umkonfigurieren lässt, dass die Stativstange sich nicht mehr parallel zum Zugelement, sondern in einem Winkel von vorzugsweise 45° oder auch 90° zu diesem erstreckt, was die Einstellmöglichkeiten und die Flexibilität zusätzliche erhöht.

Die Erfindung wird nachfolgend mit Bezug auf die Zeichnungen anhand von bevorzugten Ausführungsformen beschrieben.

In den Zeichnungen zeigen:
- Fig. 1: eine schematische Seitenansicht einer ersten Ausführungsform des erfindungsgemäßen Schnellklemmstativs mit geöffneter Schnellspannzwinge und Aufsicht auf die seitlich an dieser angeordnete hülsenartige Führung mit eingesetzter Stativstange und daran montierter Kamera,
- Fig. 2: das Schnellklemmstativ von Fig. 1 nach dem Schließen der Schnellspannzwinge,
- Fig. 3: eine schematische, gegenüber der Darstellung von Fig. 1 und 2 um 90° gedrehte Seitenansicht der in Fig. 1 und 2 gezeigten Ausführungsform des Schnellspannstativs,
- Fig. 4: eine schematische Darstellung einer weiteren Ausführungsform der Erfindung, bei der die hülsenartige Führung am flanschartigen Halteelement aufgenommen ist, und
- Fig. 5: eine schematische Seitenansicht der Ausführungsform von Fig. 4.

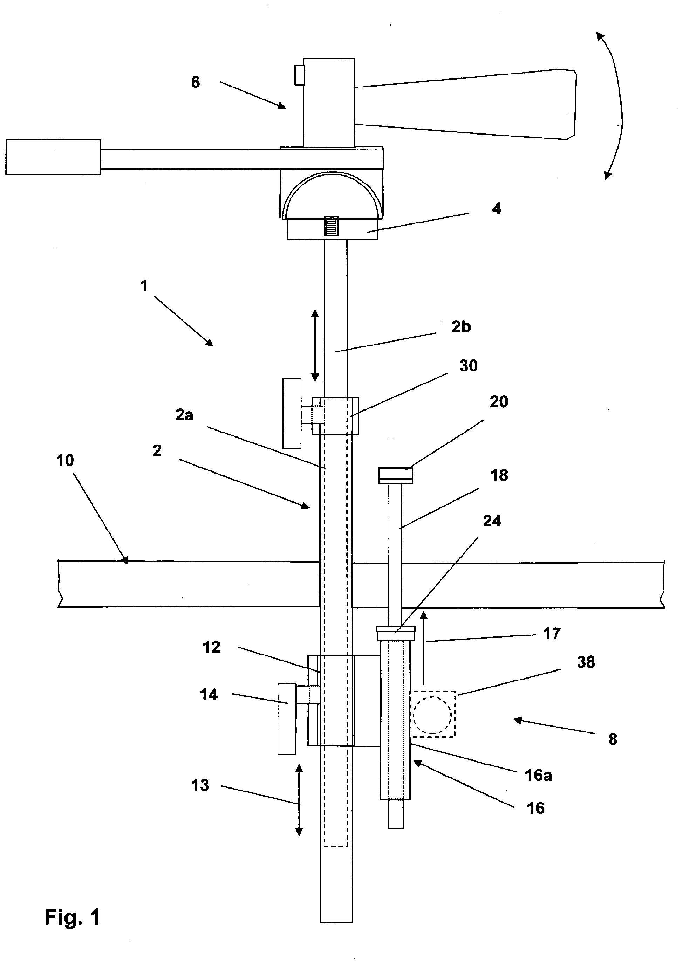

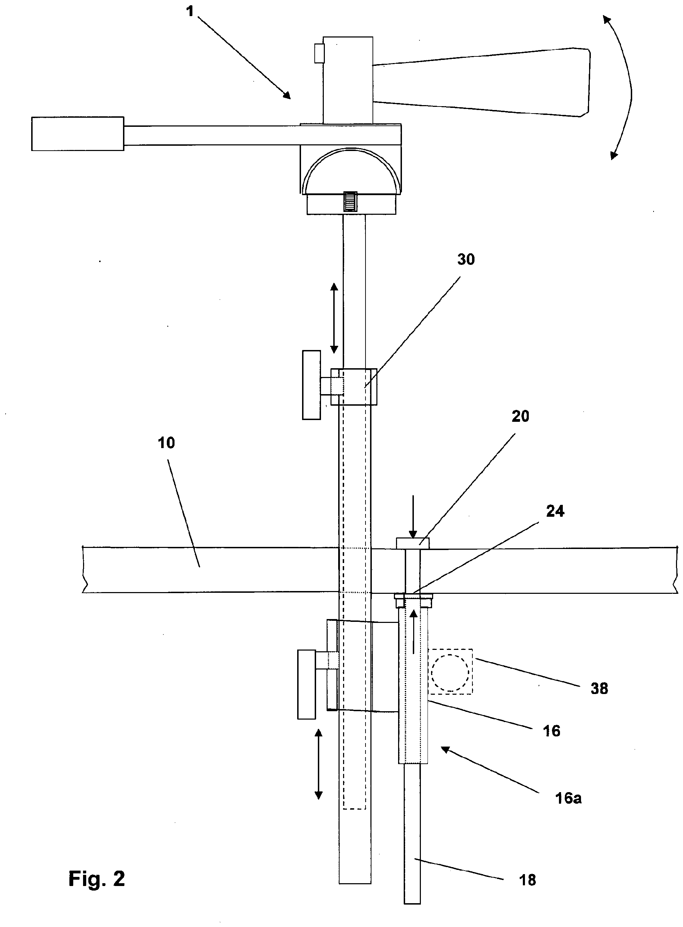

Wie in Fig. 1 gezeigt ist, umfasst ein Schnellklemmstativ 1 eine Stativstange 2, an deren einem Ende ein Aufnahmeadapter 4 zur Aufnahme eines zu haltenden Gegenstandes angeordnet ist, welcher durch die angedeutete Kamera 6 symbolisiert wird. Die Stativstange 2 ist mit einer Klemmeinrichtung in Form einer Schnellspannzwinge 8 gekoppelt, mittels welcher sich die Stativstange 2 an einem ortsfesten Klemmobjekt 10 befestigen lässt. Die Verbindung zwischen der Schnellspannzwinge 8 und der Stativstange 2 erfolgt über eine hülsenartige Führung 12, in welcher die Stativstange 2, wie durch den Doppelpfeil 13 in Fig. 1 und 2 angedeutet, verschiebbar und in unterschiedlichen Positionen arretierbar geführt wird.

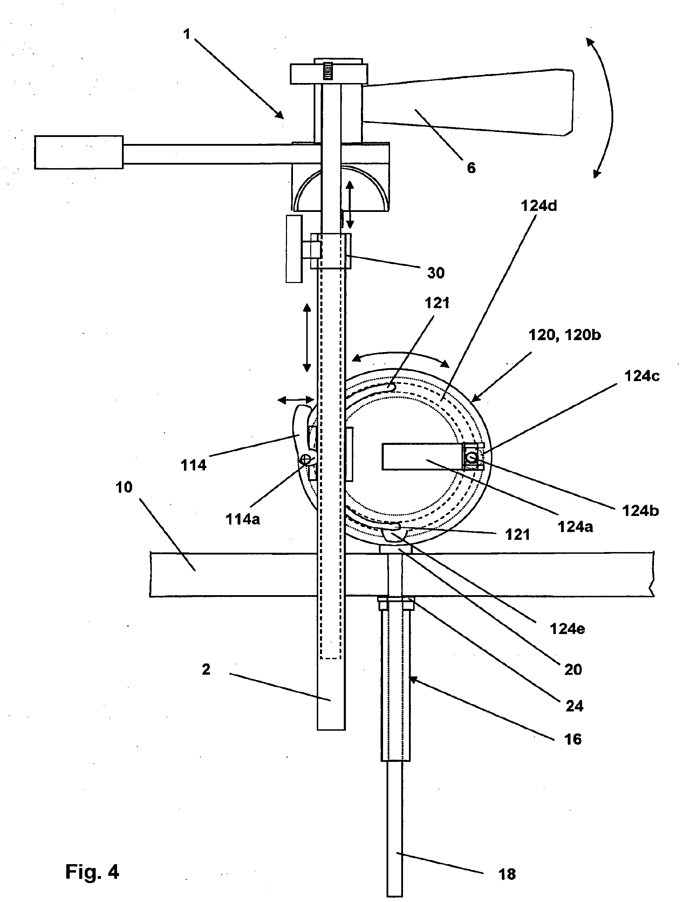

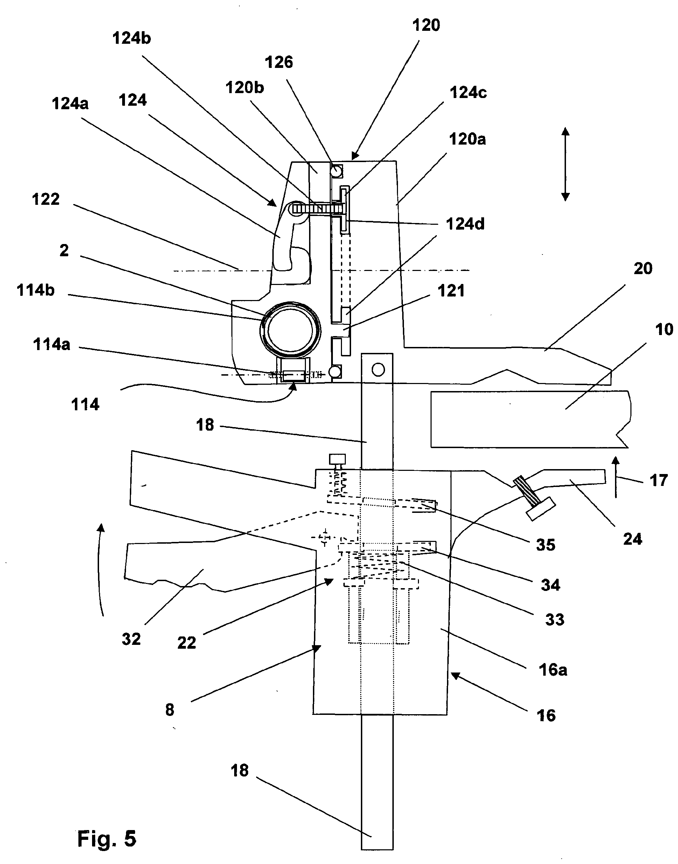

Das Arretieren der Stativstange 2 in der hülsenartigen Führung 12 erfolgt durch eine Arretiereinrichtung, welche beispielsweise als dargestellte Klemmschraube 14 oder auch als Exzenter-Spanner, wie in Fig. 4 und 5 gezeigt, ausgeführt sein kann.

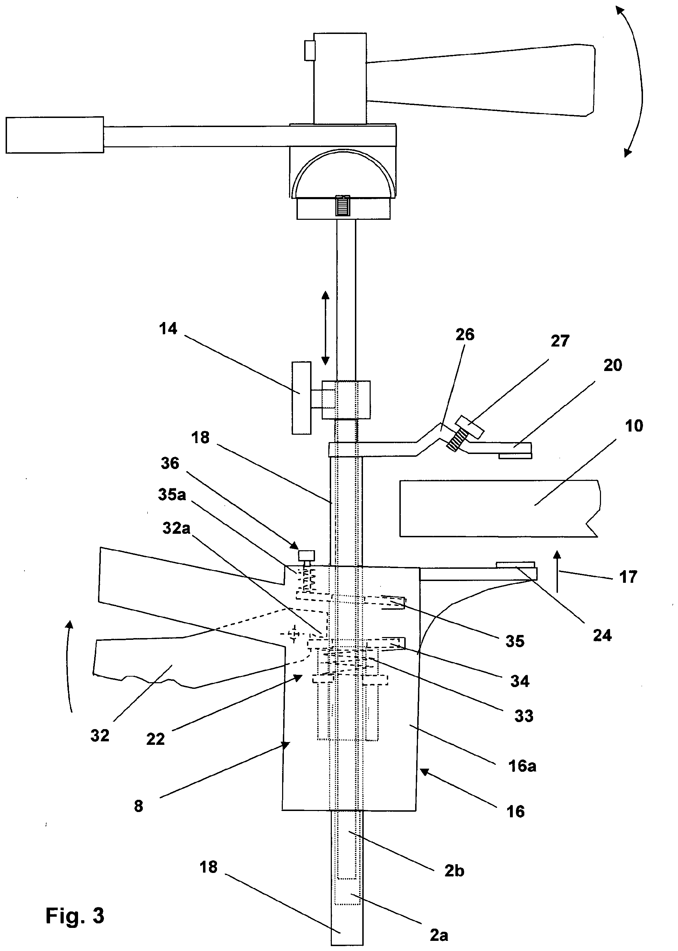

Gemäß der Darstellung der Fig. 2 und 3 umfasst die Schnellspannzwinge 8 ein Griffelement 16 mit einem Gehäuse 16a, in welchem ein stabförmiges Zugelement 18 mit einem vorzugsweise rechteckigen Querschnitt linear verschiebbar geführt ist. An dem einen, dem Griffelement 16 gegenüberliegenden Ende des stabförmigen Zugelements 18 ist ein mit diesem verschiebbarer beweglicher Spannarm 20 befestigt, der sich mit dem Zugelement 18 mit bewegt, wenn dieses mittels eines im Griffelement 16 wirkenden Handhebelmechanismus 22 mit einer Vorschubkraft beaufschlagt wird, welche das Griffelement 16 mit einem daran befestigten oder geformten Haltearm 24 in Richtung des in Fig. 3 gezeigten Pfeils 17 auf den beweglichen Spannarm 20 zu bewegt.

Wie der Darstellung der Figuren 1 und 2 hierbei weiterhin entnommen werden kann, ist die hülsenartige Führung 12 bei der dort gezeigten Ausführungsform der Erfindung über ein nicht näher bezeichnetes Zwischenelement in einem Abstand von beispielsweise 1 bis 2 cm oder mehr direkt seitlich am Gehäuse 16a des Griffelements 16 in der Weise befestigt, dass sich die Längsrichtung der Stativstange 2 bevorzugt parallel zu dem stabförmigen Zugelement 18 erstreckt.

Der Handhebelmechanismus 22, welcher in Fig. 3 im Detail gezeigt ist, umfasst einen am Griffelement 16 verschwenkbar gelagerten Handhebel 32, der ein an diesem angeordnetes und mit diesem verschwenkbares Eingriffselement 34 besitzt, welches reib- und/oder formschlüssig in die Außenseite des stabförmigen Zugelements 18 eingreift. Das Eingriffselement ist vorzugsweise als Plättchen 34 ausgeführt, dass eine scharfkantige Öffnung besitzt, durch die das Zugelement 18 mit Spiel hindurch geführt ist. Wie in Fig. 3 angedeutet ist, ist das Plättchen 34 mit seinem einen Ende in einer taschenförmigen Aufnahme verschwenkbar aufgenommen und wird durch eine Feder 33 in Richtung auf den beweglichen Spannarm 20 zu mit einer federelastischen Kraft beaufschlagt. Durch Verschwenken des Handhebels 32 in Richtung des nicht näher bezeichneten Pfeils in Fig. 3 wirkt dieses über einen nockenartigen Abschnitt 32a des Handhebels 32 auf das Eingriffslelement/Plättchen was dazu führt, dass sich das Plättchen 34 in der Aufnahme entgegen dem Uhrzeigersinn verschwenkt und auf dem Zugelement 18 verkantet, wodurch dieses bei einer Weiterbewegung des Handhebel 32 entgegengesetzt zur Richtung des Pfeils 17 verschoben wird. Hierdurch bewegt sich das Griffelement 16 und der an diesen angeordnete Haltearm 24 in Richtung des Pfeils 17 auf den beweglichen Spannarm 20 zu. Durch die Beweglichkeit des Plättchens 34 in der Aufnahme ist es hierbei möglich, das Griffelement 16 frei in Richtung des Pfeils 17 auf dem Zugelement 18 zu verschieben, um den Haltearm 24 und den beweglichen Spannarm 20 ohne eine Betätigung des Handhebels 32 an das ortsfeste Klemmobjekt 10 heran zu bewegen.

Wie der Darstellung der Fig. 3 weiterhin entnommen werden kann, umfasst der Handhebelmechanismus 22 weiterhin ein Bremselement 35, welches ähnlich dem Eingriffselement 34 als Plättchen mit einer vorzugsweise ebenfalls scharfkantigen Durchtrittsöffnung für das Zugelement 18 ausgestaltet ist, das in einer weiteren Aufnahme im Gehäuse 16a des Griffelements 16 verschwenkbar aufgenommen ist. Das Bremselement 35 wird hierbei durch eine Zugfeder 35a an seinem der Aufnahme gegenüberliegenden Ende vom Eingriffselement 34 weg gedrängt, so dass das Bremselement 35 auf dem Zugelement 18 in der Durchtrittsöffnung desselben verkantet und hierdurch eine Bewegung des stabförmigen Zugelements 18 entgegen der Richtung des Pfeils 17 verhindert. Hierdurch wird es ermöglicht, dass das Griffelement 16 nach dem Loslassen des Handhebels 22 nicht wieder im Giffelement 16 zurück bewegt wird, bzw. die zwischen dem beweglichen Spannarm 20 und dem Haltearm 24 am Griffelement 16 erzeugte Klemmkraft durch ein erneutes Betätigen des schwenkbaren Handhebels 32 bei Bedarf erhöht werden kann, wenn der Haltearm und der Spannarm am ortsfesten Klemmobjekt 10 anliegen.

Wie der Darstellung der Fig. 3 weiterhin entnommen werden kann, sind dem Bremselement 35 Entriegelungsmittel 36 zugeordnet, welche beispielsweise als ein dargestellter Stößel mit außenliegendem Druckknopf ausgeführt sein können, der zur .Aufhebung der zwischen dem Griffelement 16 und dem beweglichen Spannarm 20 wirkenden, vom Bremselement 35 erzeugten Klemmkraft auf das Bremselement 35 wirkt und dieses entgegen der von der Feder 35a vom Zugelement 18 ausgeübten Zugkraft verdreht. Alternativ kann es ebenfalls möglich sein, dass anstelle einer Zugfeder 35a eine Druckfeder eingesetzt wird, die das Bremselement 35 in der gleichen Richtung wie das Plättchen 34 verschwenkt, wobei die Entriegelungsmittel 36 in diesem Falle einen Zugstab umfassen, über den der der Aufnahme gegenüberliegende Teil des Bremselements 35 zum Lösen der Verriegelung in Richtung des Pfeils 17 bewegbar ist. In entsprechender Weise besteht ebenfalls die Möglichkeit, dass die Entriegelungsmittel nicht auf das Bremselement 35 sondern alternativ auf das Eingriffselement 34 wirken, um dieses außer Eingriff mit dem stangenförmigen Zugelement 18 zu bringen.

Wie der Darstellung der Fig. 3 weiterhin entnommen werden kann, ist im beweglichen Spannarm 20 eine Klemmsicke 26 gebildet, die vorzugsweise dreieckig ausgebildet ist, um das erfindungsgemäße Stativ 1 auch an runden Klemmobjekten mit einem kleinen Durchmesser, wie beispielsweise dünnen Bäumen oder Geländer- oder Zaunsprossen, befestigen zu können,

Um hierbei eine zusätzliche Verdrehsicherung zu schaffen, ist in der Klemmsicke 26 bevorzugt ein dornartiges Eingriffselement angeordnet, das vorzugsweise als eine in Fig. 3 angedeutete Madenschraube 27 ausgeführt ist, die bei Bedarf vorzugsweise von Hand mehr oder weniger tief in eine Gewindebohrung der Klemmsicke 26 eingetreten werden kann.

Um die Ausziehlänge der Stativstange 2 zu vergrößern, umfasst diese wenigstens einen ersten und einen zweiten teleskopartig ineinander einschiebbaren Stangenabschnitt 2a, 2b, die durch eine Klemmeinrichtung 30, beispielsweise eine auf dem äußeren Stangenabschnitt 2a angeordnete Klemmschelle, die durch eine Klemmschraube zusammengezogen werden kann, in einer gewünschten Position relativ zueinander arretiert werden können.

Weiterhin kann am Griffelement 16 zusätzlich zu der hülsenartigen Führung 12 eine um einen Winkel von 90° zu dieser gedrehte weitere hülsenartige Führung 38 befestigt sein, in der die Stativstange 2 alternativ geführt werden kann.

Nach einer weiteren, in den Figuren 4 und 5 gezeigten Ausführungsform der Erfindung ist die hülsenartige Führung 12 verschwenkbar an einem mit dem beweglichen Spannarm 20 verbundenen flanschartigen Halteelement 120 aufgenommen, welches sich bevorzugt in einer parallel zum stabförmigen Zugelement 18 verlaufenden Ebene erstreckt, die besonders bevorzugt auch orthogonal zu den nicht näher bezeichneten, das Klemmobjekt 10 klemmenden parallelen Anlageflächen des beweglichen Spannarms 20 und des Haltearms 24 verläuft.

Wie hierbei in den Darstellungen der Figuren 4 und 5 weiterhin gezeigt ist, umfasst das flanschartige Halteelement 120 einen ersten, mit dem Spannarm 20 verbundenen feststehenden Flanschabschnitt 120a sowie einen zweiten beweglichen Flanschabschnitt 120b, an welchem die hülsenartige Führung 12 befestigt, bzw. vorzugsweise integral geformt ist. Der zweite bewegliche Flanschabschnitt 120b ist gegenüber dem ersten Flanschabschnitt 120a um eine Drehachse 122 rotierbar und kann durch weitere Arretiermittel 124 in unterschiedlichen Winkelpositionen arretiert werden. Von den unterschiedlichen Winkelpositionen ist in Fig. 4 diejenige gezeigt, bei der sich die hülsenartige Führung 12 mit der in dieser aufgenommenen Stativstange 2 in Richtung parallel zum Zugelement 18 erstreckt. Demgegenüber wurde der zweite bewegliche Flanschabschnitt in Fig. 5 in einer Winkelstellung arretiert, in der sich die hülsenartige Führung 12 im Winkel von 90° hierzu parallel zu dem als Tischplatte ausgeführten Klemmobjekt 10 erstreckt.

Die zuvor beschriebene Ausführungsform der Erfindung besitzt den Vorteil, dass sich die hülsenartige Führung 12 und damit die Stativstange 2 in einer beliebigen Winkelstellung gegenüber dem Zugelement 18 positionieren lässt, wodurch es ermöglicht wird, dass der zu haltende Gegenstand 6 seitlich von störenden Objekten wie Ästen positioniert werden kann, um z.B. bei einer Kamera einen freien Blick auf ein aufzunehmendes Motiv zu erhalten. Ein weiterer Vorteil dieser Ausführungsform besteht darin, dass sich die Vorrichtung 1 auf ein sehr kompaktes Maß zusammenlegen lässt.

Um eine sehr einfache und feinfühlige Winkelpositionierung des zweiten Halteelements 120b zu ermöglichen, kann es weiterhin vorgesehen sein, dass die weiteren Arretiermittel 124 einen am ersten oder zweiten Flanschabschnitt 120a, 120b verschwenkbar gelagerten ersten Exzenter-Spannhebel 124a umfassen, welcher über ein mit diesem gekoppeltes Zugelement 124b auf einen Nutstein 124c wirkt, welcher in eine T-förmige Ringnut 124d im jeweils gegenüberliegenden Flanschabschnitt 120b, bzw. 120a aufgenommen ist, wie dies durch die gestrichelten Linien in Fig. 4 angedeutet ist. Zum Einsetzen des Nutsteins 124c kann die Ringnut 124d einen erweiterten Abschnitt 124e aufweisen, welcher einen geringfügig größeren Durchmesser als der Nutstein 124c aufweist.

Um hierbei eine möglichst spielfreie und auch kostengünstige Lagerung des zweiten Flanschabschnitts 120b gegenüber dem ersten ortsfesten Flanschabschnitt 120a zu erhalten, kann am ersten und/oder auch am zweiten Flanschabschnitt ein Führungselement 121 angeordnet sein, welches sich koaxial zur Drehachse 122 des zweiten Flanschabschnitts 120b erstreckt. Das Führungselement 121, welches bevorzugt integral mit dem insbesondere aus Kunststoff gefertigten zweiten Flanschabschnitt 120b geformt ist, weist eine der Krümmung der Ringnut 124d angepasste Krümmung auf und erstreckt sich in die T-förmige Ringnut 124d hinein, bevorzugt bis zu deren Nutengrund, wie dies in Fig. 5 angedeutet ist. Um hierbei eine besonders leichtgängige Lagerung des zweiten Flanschabschnitts 120b während der Verdrehung und gleichzeitig einen spielfreien Klemmsitz des zweiten Flanschabschnitts 120b in der gewählten Winkelstellung zu erhalten, ist zwischen dem ersten und dem zweiten Flanschabschnitt 120a, 120b bevorzugt ein O-Ring 126 angeordnet, welcher gemäß der Darstellung von Fig. 5 in eine gegenüber der Ringnut 124d radial außenliegende, nicht näher bezeichnete Nut eingelegt ist, die eine geringfügig geringere Tiefe als der Durchmesser des O-Rings 126 besitzt. Durch Bewegen des ersten Exzenter-Spannhebels 124a in die in Fig. 5 gezeigte Klemmposition wird der erste Flanschabschnitt 120a über das Zugelement 124b auf den zweiten Flanschabschnitt 120b zu bewegt und der gummielastische O-Ring 126 zusammen gequetscht, was wiederum zu einer großflächigen Einleitung der vom ersten Exzenter-Spannhebel 124a ausgeübten Klemmkraft in die jeweiligen Kontaktflächen zwischen dem O-Ring 126 und dem ersten und zweiten Flanschabschnitt 120a, 120b führt. Durch das gummielastische Material des O-Rings 126 wird dabei in vorteilhafter Weise eine Reibkraft erzeugt, die eine präzise Arretierung in der gewählten Winkelstellung mit einer entsprechend hohen Haltekraft gewährleistet.

Nach einem weiteren der Erfindung zugrunde liegenden Gedanken ist die hülsenartige Führung 18 in vorteilhafter Weise integral mit dem zweiten Flanschabschnitt 120b geformt. Gleichzeitig oder alternativ kann die Arretiereinrichtung 14 einen weiteren Exzenter-Spannhebel 114 umfassen, welcher verschwenkbar am zweiten Flanschabschnitt 120b gelagert ist. Der weitere Exzenter-Spanhebel 114 besitzt vorzugsweise einen exzentrischen Kontaktabschnitt 114a, der auf eine geschlitzte Klemmhülse 114b der hülsenartigen Führung 18 wirkt, in welcher die Stativstange 2 bei geöffnetem Exzenter-Spannhebel 114 verschiebbar geführt ist, um diese in der in Fig. 5 gezeigten Klemmstellung zusammen zu drücken und die Stativstange 2 in der gewünschten Position am zweiten Flanschabschnitt 120b zu fixieren.

### Liste der Bezugszeichen

- 1: Schnellklemmstativ
- 2: Stativstange
- 2a: äußerer Stangenabschnitt
- 2b: innerer Stangenabschnitt
- 4: Aufnahmeadapter
- 6: zu haltender Gegenstand
- 8: Klemmeinrichtung/Schnellspannzwinge
- 10: ortsfestes Klemmobjekt, an dem das Stativ befestigt wird
- 12: hülsenartige Führung
- 13: Doppelpfeil
- 14: Arretiereinrichtung
- 16: Griffelement
- 16a: Gehäuse des Griffelements
- 17: Pfeil, der Vorschubrichtung angibt
- 18: stabförmiges Zugelement
- 20: beweglicher Spannarm
- 22: Handhebelmechanismus
- 24: Haltearm am Griffelement
- 26: Klemmsicke
- 27: dornartiges Eingriffselement
- 30: Klemmeinrichtung
- 32: verschwenkbarer Handhebel
- 32a: nockenartiger Abschnitt des Handhebels
- 33: Druckfeder, die auf Eingriffselement wirkt
- 34: Eingriffselement
- 35: Bremselement
- 35a: Feder
- 36: Entriegelungsmittel
- 38: weitere hülsenartige Führung
- 114: weiterer Exzenter-Spannhebel
- 114a: exzentrischer Kontaktabschnitt des weiteren Exzenter-Spannhebels
- 114b: geschlitzte Klemmhülse
- 120: flanschartiges Halteelement
- 120a: erster feststehender Flanschabschnitt
- 120b: zweiter beweglicher Flanschabschnitt
- 121: in Ringnut eingreifendes Führungselement
- 122: Drehachse
- 124: weitere Arretiermittel
- 124a: erster Exzenter-Spannhebel
- 124b: Zugelement
- 124c: Nutstein
- 124d: Ringnut
- 124e: erweiterter Abschnitt der Ringnut
- 126: O-Ring

## Patentansprüche

1. Schnellklemmstativ (1) mit einer Stativstange (2), an deren einem Ende ein Aufnahmeadapter (4) zur Aufnahme eines zu haltenden Gegenstandes (6), insbesondere einer Kamera, eines optischen Instruments oder einer Gewehrhalterung angeordnet ist, sowie mit einer mit der Stativstange (2) gekoppelten Klemmeinrichtung (8), mittels welcher sich die Stativstange (2) durch Betätigen der Klemmeinrichtung (8) an einem ortsfesten Klemmobjekt (10) befestigen lässt, wobei
die Klemmeinrichtung eine durch einen Handhebelmechanismus (22) betätigbare Schnellspannzwinge (8) ist, die ein in einem Griffelement (16) linear verschiebbar geführtes stabförmiges Zugelement (18) umfasst, an dessen einem Ende ein am stabförmigen Zugelement (18) befestigter und mit diesem verschiebbarer beweglicher Spannarm (20) befestigt ist, wobei das stabförmige Zugelement (18) mittels eines im Griffelement (16) wirkenden Handhebelmechanismus (22) mit einer Vorschubkraft beaufschlagbar ist, welche den beweglichen Spannarm (20) auf einen am Griffelement (16) angeordneten Haltearm (24) zu bewegt,
**dadurch gekennzeichnet, dass**
an der Schnellspannzwinge (8) eine hülsenartige Führung (12) mit einer Arretiereinrichtung (14) aufgenommen ist, in welcher die Stativstange (2) verschiebbar und in unterschiedlichen Positionen arretierbar geführt wird, und
dass die hülsenartige Führung (12) verschwenkbar an einem mit dem beweglichen Spannarm (20) verbundenen flanschartigen Halteelement (120, 120a, 120b) aufgenommen ist.

2. Vorrichtung nach Anspruch 1,
**dadurch gekennzeichnet,**
**dass** der Handhebelmechanismus (22) einen am Griffelement (16) verschwenkbar gelagerten Handhebel (32) umfasst, der ein an diesem angeordnetes und mit diesem verschwenkbares Eingriffselement (34) umfasst, welches reib- und/oder formschlüssig in die Außenseite des stabförmigen Zugelements (18) eingreift.

3. Vorrichtung nach Anspruch 2,
**dadurch gekennzeichnet,**
**dass** das Eingriffselement (34) mit einem Bremselement (35) zusammenwirkt, welches eine Zurückbewegung des stabförmigen Zugelements (18) nach einer Vorschubbewegung verhindert.

4. Vorrichtung nach Anspruch 2 oder 3,
**dadurch gekennzeichnet,**
**dass** dem Eingriffselement (34) oder dem Bremselement (35) Entriegelungsmittel (36) zugeordnet sind, welche zur Aufhebung der zwischen dem Griffelement (16) und dem beweglichen Spannarm (20) wirkenden Klemmkraft auf das Eingriffselement (34) oder Bremselement (35) wirken und dieses entgegen der vom Zugelement (18) ausgeübten Zugkraft verdrehen.

5. Vorrichtung nach einem der vorhergehenden Ansprüche,
**dadurch gekennzeichnet,**
**dass** im Haltearm (24) und/oder im beweglichen Spannarm (20) eine Klemmsicke (26) geformt ist.

6. Vorrichtung nach Anspruch 5,
**dadurch gekennzeichnet,**
**dass** in der Klemmsicke (26) ein dornartiges Eingriffselement (27) angeordnet ist, insbesondere eine in eine Gewindebohrung der Klemmsicke (26) eindrehbare Madenschraube.

7. Vorrichtung nach einem der vorhergehenden Ansprüche, **dadurch gekennzeichnet,**
**dass** das flanschartige Halteelement einen ersten, mit dem Spannarm (20) verbundenen feststehenden Flanschabschnitt (120a) sowie einen mit der hülsenartigen Führung (12) gekoppelten und diese tragenden zweiten beweglichen Flanschabschnitt (120b) umfasst, welcher relativ zum ersten Flanschabschnitt (120a) um eine Drehachse (122) rotierbar und durch weitere Arretiermittel (124, 124a, 124b, 124c, 124d) in unterschiedlichen Winkelpositionen arretierbar ist.

8. Vorrichtung nach Anspruch 7, **dadurch gekennzeichnet,**
**dass** die weiteren Arretiermittel einen am ersten oder zweiten Flanschabschnitt (120a, 120b) verschwenkbar gelagerten ersten Exzenter-Spannhebel (124a) umfassen, welcher über ein mit diesem gekoppeltes Zugelement (124b) auf einen Nutstein (124c) wirkt, welcher in einer T-förmigen Ringnut (124d) im gegenüberliegenden Flanschabschnitt (120b, 120a) aufgenommen ist.

9. Vorrichtung nach Anspruch 8, **dadurch gekennzeichnet,**
**dass** am ersten und/oder am zweiten Flanschabschnitt ein sich koaxial zur Drehachse des zweiten Flanschabschnitts (120b) erstreckendes Führungselement (121) angeordnet ist, welches sich in die T-förmige Ringnut (124d) hineinerstreckt.

10. Vorrichtung nach einem der Ansprüche 7 bis 9, **dadurch gekennzeichnet,**
**dass** die hülsenartige Führung (18) integral mit dem zweiten Flanschabschnitt (120b) geformt ist, und/oder dass die Arretiereinrichtung (14) einen weiteren Exzenter-Spannhebel (114) umfasst, welcher verschwenkbar am zweiten Flanschabschnitt (120b) gelagert ist und welcher einen exzentrischen Kontaktabschnitt (114a) aufweist, der auf eine geschlitzte Klemmhülse (114b) der hülsenartigen Führung (18) wirkt, in welcher die Stativstange (2) bei geöffnetem Exzenter-Spannhebel (114) verschiebbar geführt ist.

11. Vorrichtung nach einem der vorhergehenden Ansprüche, **dadurch gekennzeichnet,**
**dass** die Stativstange (2) wenigstens einen ersten und einen zweiten teleskopartig ineinander einschiebbaren und durch eine Klemmeinrichtung (30) relativ zueinander arretierbaren Stangenabschnitt (2a, 2b) umfasst.

12. Vorrichtung nach einem der vorhergehenden Ansprüche, **dadurch gekennzeichnet,**
**dass** am Griffelement (16) zusätzlich zu der hülsenartigen Führung (12) eine um einen Winkel von insbesondere 45° oder 90° zu dieser gedrehte weitere hülsenartige Führung (38) aufgenommen ist.

13. Vorrichtung nach einem der vorhergehenden Ansprüche, **dadurch gekennzeichnet,**
**dass** sich das flanschartigen Halteelement (120, 120a, 120b) in einer parallel zum stabförmigen Zugelement (18) verlaufenden Ebene erstreckt.

## Claims

1. A quick-clamp stand (1) with a stand rod (2), on one end of which a receiving adapter (4) for receiving an object (6) which is to be held, especially a camera, an optical instrument or a gun holder, is arranged, and with a clamping means (8) coupled with the stand rod (2), by means of which the stand rod (2) can be fastened to a fixed clamping object (10) by actuating the clamping means (8), wherein
the clamping means is a quick-action clamp (8) which can be actuated by a hand-lever mechanism (22), and which comprises a rod-shaped traction element (18) guided in linearly displaceable manner in a grip element (16), on the one end of which is fastened a clamping arm (20) which is fastened to the rod-shaped traction element (18) and movable in displaceable manner therewith, wherein the rod-shaped traction element (18) can be acted on with an advance force by means of a hand-lever mechanism (22) operating in the grip element, which force moves the movable clamping arm (20) towards a holding arm (24) arranged on the grip element (16),
**characterised in that**
a sleeve-like guide (12) with a locking device (14) is received on the quick-action clamp (8), in which guide the stand rod (2) is guided in displaceable manner and so as to be lockable in different positions, and
**in that** the sleeve-like guide (12) is pivotably received on a flange-like holding element (120, 120a, 120b) connected to the movable clamping arm (20).

2. A device according to Claim 1,
**characterised in that**
the hand-lever mechanism (22) comprises a hand lever (32) pivotably mounted on the grip element (16), which hand lever comprises an engagement element (34) which is arranged on said lever and pivotable therewith which engages frictionally and/or in positive manner in the outside of the rod-shaped traction element (18).

3. A device according to Claim 2,
**characterised in that**
the engagement element (34) cooperates with a braking element (35) which prevents the rod-shaped traction element (18) from moving back after an advancing movement.

4. A device according to Claim 2 or 3,
**characterised in that**
unlocking means (36) are associated with the engagement element (34) or the braking element (35), which means act to cancel out the clamping force on the engagement element (34) or braking element (35), which force operates between the grip element (16) and the movable clamping arm (20) and turn said element counter to the tensile force exerted by the traction element (18).

5. A device according to one of the preceding claims,
**characterised in that**
a clamping bead (26) is formed in the holding arm (24) and/or in the movable clamping arm (20).

6. A device according to Claim 5,
**characterised in that**
a mandrel-like engagement element (27) is arranged in the clamping bead (26), especially a grub screw which can be screwed into a threaded bore of the clamping bead (26).

7. A device according to one of the preceding claims,
**characterised in that**
the flange-like holding element comprises a first, fixed, flange portion (120a) connected to the clamping arm (20) and a second, movable, flange portion (120b) coupled with the sleeve-like guide (12) and bearing it, which second portion is rotatable relative to the first flange portion (120a) about an axis of rotation (122) and is lockable in different angular positions by further locking means (124, 124a, 124b, 124c, 124d).

8. A device according to Claim 7,
**characterised in that**
the further locking means comprise a first eccentric clamping lever (124a) pivotably mounted on the first or second flange portion (120a, 120b), which lever operates by way of a traction element (124b) coupled therewith on a sliding block (124c) which is received in a T-shaped annular groove (124d) in the opposing flange portion (120b, 120a).

9. A device according to Claim 8,
**characterised in that**
a guide element (121) extending coaxially to the axis of rotation of the second flange portion (120b) is arranged on the first and/or on the second flange portion, which element extends into the T-shaped annular groove (124d).

10. A device according to one of Claims 7 to 9,
**characterised in that**
the sleeve-like guide (18) is formed integrally with the second flange portion (120b), and/or **in that** the locking device (14) comprises a further eccentric clamping lever (114) which is mounted pivotably on the second flange portion (120b) and which has an eccentric contact portion (114a) which operates on a slotted clamping sleeve (114b) of the sleeve-like guide (18) in which the stand rod (2) is guided in displaceable manner when the eccentric clamping lever (114) is opened.

11. A device according to one of the preceding claims,
**characterised in that**
the stand rod (2) comprises at least a first and a second rod portion (2a, 2b) which can be pushed into one another in telescope-like manner and are lockable relative to each other by a clamping means (30).

12. A device according to one of the preceding claims,
**characterised in that**
a further sleeve-like guide (38) which is turned through an angle of in particular 45° or 90° thereto is received on the grip element (16) in addition to the sleeve-like guide (12).

13. A device according to one of the preceding claims,
**characterised in that**
the flange-like holding element (120, 120a, 120b) extends in a plane running parallel to the rod-shaped traction element (18).

## Revendications

1. Pied à serrage rapide (1) comportant une tige de pied (2), au niveau d'une extrémité de laquelle est disposé un adaptateur d'accueil (4) destiné à l'accueil d'un objet (6) à maintenir, en particulier une caméra, d'un instrument optique ou d'un support de fusil, et comportant aussi un dispositif de serrage (8) couplé à la tige de pied (2), dispositif de serrage au moyen duquel la tige de pied (2) peut être fixée à un objet de serrage (10) en position fixe par le biais de l'actionnement du dispositif de serrage (8), dans lequel
le dispositif de serrage est une virole à serrage rapide (8) actionnable par le biais d'un mécanisme à levier à main (22), laquelle virole comprend un élément de traction en forme de barre (18) guidé de manière coulissante et linéaire dans un élément de préhension (16), élément de traction au niveau d'une extrémité duquel est fixé un bras de serrage mobile (20) fixé à l'élément de traction en forme de barre (18) et apte à coulisser avec celui-ci, dans lequel l'élément de traction en forme de barre (18) peut être sollicité au moyen d'un mécanisme à levier à main (22) agissant dans l'élément de préhension (16) avec une force d'avance qui déplace le bras de serrage mobile (20) sur un bras de maintien (24) disposé au niveau de l'élément de préhension (16),
**caractérisé en ce que**
un guide en forme de douille (12) comportant un dispositif de blocage est accueilli au niveau de la virole à serrage rapide (8), guide dans lequel la tige de pied (2) peut coulisser et être guidée de manière à être bloquée dans différentes positions, et
**en ce que** le guide en forme de douille (12) est accueilli de manière pivotante au niveau d'un élément de maintien de type bride (120, 120a, 120b) relié au bras de serrage mobile (20).

2. Dispositif selon la revendication 1,
**caractérisé en ce que**
le mécanisme à levier à main (22) comprend un levier à main (32) monté de manière pivotante au niveau de l'élément de préhension (16), lequel mécanisme comprend un élément de préhension (34) disposé au niveau de celui-ci et apte à pivoter avec celui-ci, lequel se met en prise par complémentarité de friction et/ou de formes dans le côté externe de l'élément de traction en forme de barre (18).

3. Dispositif selon la revendication 2,
**caractérisé en ce que**
l'élément de préhension (34) coopère avec un élément de freinage (35), lequel empêche un mouvement de recul de l'élément de traction en forme de barre (18) après un mouvement d'avance.

4. Dispositif selon la revendication 2 ou 3,
**caractérisé en ce que**
des moyens de déverrouillage (36) sont associés à l'élément de préhension (34) ou à l'élément de freinage (35), lesquels agissent sur l'élément de préhension (34) ou l'élément de freinage (35) afin d'annuler la force de serrage agissant entre l'élément de préhension (16) et le bras de serrage mobile (20) et déforment cet élément à l'encontre de la force de traction exercée par l'élément de traction (18).

5. Dispositif selon l'une des revendications précédentes,
**caractérisé en ce que**
dans le bras de maintien (24) et/ou dans le bras de serrage mobile (20) est formée une moulure de serrage (26).

6. Dispositif selon la revendication 5,
**caractérisé en ce que**
dans la moulure de serrage (26) est disposé un élément de préhension de type broche (27), en particulier une vis sans tête pouvant tourner dans un trou fileté de la moulure de serrage (26).

7. Dispositif selon l'une des revendications précédentes,
**caractérisé en ce que**
l'élément de maintien de type bride comprend une première section de bride fixe (120a) reliée au bras de serrage (20) ainsi qu'une seconde section de bride mobile (120b) couplée au guide de type douille (12) et portant celui-ci, laquelle section peut effectuer une rotation par rapport à la première section de bride (120a) autour d'un axe de rotation (122) et peut être bloquée dans différentes positions angulaires par le biais de moyens de blocage (124, 124a, 124b, 124c, 124d) supplémentaires.

8. Dispositif selon la revendication 7,
**caractérisé en ce que**
les moyens de blocage supplémentaires comprennent un premier levier de serrage à excentrique (124a) monté de manière pivotante au niveau de la première ou de la seconde section de bride (120a, 120b), lequel levier agit sur un coulisseau (124c) par l'intermédiaire d'un élément de traction (124b) couplé à celui-ci, lequel est accueilli dans une rainure annulaire en forme de T (124d) dans la section de bride (120b, 120a) opposée.

9. Dispositif selon la revendication 8,
**caractérisé en ce que**
au niveau de la première et/ou de la seconde section de bride est disposé un élément de guidage (121) s'étendant coaxialement à l'axe de rotation de la seconde section de bride (120b) et qui s'étend dans la rainure annulaire en forme de T (124d).

10. Dispositif selon l'une des revendications 7 à 9,
**caractérisé en ce que**
le guide de type douille (18) est formé d'un seul tenant avec la seconde section de bride (120b), et/ou **en ce que** le dispositif de blocage (14) comprend un levier de serrage à excentrique (114) supplémentaire, lequel est monté de manière pivotante au niveau de la seconde section de bride (120b) et lequel présente une section de contact excentrique (114a) qui agit sur une douille de serrage fendue (114b) du guide de type douille (18), dans laquelle la tige de pied (2) est guidée de manière coulissante lorsque le levier de serrage à excentrique (114) est ouvert.

11. Dispositif selon l'une des revendications précédentes,
**caractérisé en ce que**
la tige de pied (2) comprend au moins une première et une seconde section de tige (2a, 2b) pouvant s'emboîter l'une dans l'autre de manière télescopique et pouvant être bloquées l'une par rapport à l'autre par le biais d'un dispositif de serrage (30).

12. Dispositif selon l'une des revendications précédentes,
**caractérisé en ce que**
au niveau de l'élément de préhension (16) en plus du guide de type douille (12) un guide de type douille (38) supplémentaire tourné selon un angle de 45° ou 90° en particulier par rapport à celui-ci est accueilli.

13. Dispositif selon l'une des revendications précédentes,
**caractérisé en ce que**
l'élément de maintien de type bride (120, 120a, 120b) s'étend dans un plan parallèle à l'élément de traction en forme de barre (18).
